# EUROPEAN PATENT SPECIFICATION

(11) **EP 3 034 288 B1**
(45) Date of publication and mention of the grant of the patent: **26.07.2017**
(21) Application number: 15199823.4
(22) Date of filing: 14.12.2015
(51) Int. Cl.: B29D 30/56, B29C 37/00

(54) **METHOD OF MANUFACTURE OF A PRE-VULCANIZED TREAD STRIP ASSEMBLY**
VERFAHREN ZUR HERSTELLUNG EINER VORGEHÄRTETEN LAUFFLÄCHENANORDNUNG
PROCÉDÉ DE FABRICATION D'UN ENSEMBLE DE BANDE DE ROULEMENT PRÉVULCANISÉE

(30) Priority: 16.12.2014 IT RM20140724
(43) Date of publication of application: 22.06.2016
(73) Proprietor: Bridgestone Corporation, Tokyo 104-8340 (JP)
(72) Inventor: DI RONZA, Raffaele, 00128 Rom (IT); DE LUCA, Francesco, 00128 Rom (IT)
(74) Representative: Marchetti, Alessio

(56) References cited:
- EP-A1- 2 072 285
- WO-A1-2009/050293
- GB-A- 2 442 333
- US-A- 5 380 383
- US-A1- 2009 169 851
- US-A1- 2009 183 812
- US-A1- 2010 051 156
- US-A1- 2012 312 451
- US-A1- 2014 261 973

## Description

The present invention concerns a pre-vulcanized tread strip assembly useful for the cold retreading of a tyre.

Generally, once the tread portion of a tyre is worn, the remaining part of the tyre is still able to guarantee the original operating conditions. Obviously, the discarding of tyres worn as above would result in both economic and environmental damage.

To avoid these drawbacks, it is now common practice to produce retread tyres, which are obtained by replacing the tread strip on a used carcass.

There are mainly two tyre retreading techniques: hot retreading and cold retreading, each characterised by a specific temperature range.

In cold retreading, a connecting layer of non-vulcanized rubber is positioned between the appropriately cleaned carcass and a new pre-vulcanized tread strip. This connecting layer has the purpose of ensuring adhesion of the used carcass to the new tread strip after vulcanization.

Generally, the pre-vulcanized tread strips are marketed in the form of an assembly composed of the same pre-vulcanized tread strip, an adhesive compound layer already arranged on the inner surface of said pre-vulcanized tread strip and a plastic film arranged to protect the adhesive compound.

US2014261973A1 discloses a process for retreading a tire, the process comprising the steps of providing a liquid rubber cement composition including a solvent, providing a release liner, applying the liquid cement composition to the release liner to form a wet film on said release liner, allowing the solvent to evaporate to thereby convert the wet film to a dried film on the release liner and thereby form a dry-transfer cement composite, providing a cured rubber component having first and second planar surfaces, where the first planar surface includes a tread pattern, adhering the dried film to the second planar surface of the cured rubber component to thereby form a tread composite, and preparing a retreaded tire using the tread composite.

WO2009050293 discloses a method of applying a water-base adhesive mix for producing tyres, the method including a step of applying a layer of adhesive mix to a work surface; and a step of drying the layer, and which includes microwave heating.

So far the adhesive compounds, commonly called cements, have been based on organic solvents. Said adhesive compounds have a high adhesion efficiency and are very easy to use. Said characteristics are due mainly to the high evaporation capacity of the organic solvent and to the solubility of the rubbers in the organic solvents and, therefore, to their capacity to fuse with another rubber forming almost one single piece once the organic solvent has evaporated.

For environmental reasons, recent decisions at European level have drastically limited the use of organic solvents in the tyre industry, thus obliging the manufacturers to find alternative solutions in order to guarantee the necessary adhesion of the rubber layers.

Water-based adhesive compounds have been considered as a solution for some time now.

Although water-based adhesive compounds able to effectively guarantee adhesion of the different parts of the tyre to one another have been produced, their use in pre-vulcanized tread strip assembly is made complicated by a series of problems. In fact, if the inner surface of the tread is not completely dry before winding, during the entire storage period of the assembly, the water tends to persist in the adhesive compound, thus slowing down the subsequent work phases.

For a more complete evaluation of the problem, it should be considered that the pre-vulcanized tread strip assemblies must be completely dry before being applied to the carcass to guarantee correct vulcanization of the adhesive compound layer. Furthermore, the pre-vulcanized tread strips have dimensions far bigger than those necessary for the retreading of one single tyre and, therefore, during retreading of the tyre the assembly has to be cut into parts of appropriate length. If the adhesion between the plastic film and the pre-vulcanized tread strip is weak, the above-mentioned cutting operation will favour detachment of the plastic film. In this way, the adhesive compound of the assembly part still to be stored will not be appropriately protected and will therefore be subject to contamination which can prejudice its effectiveness. The above is particularly true as regards the end of the assembly produced with the cut.

The need was therefore felt for a solution that allowed the use of water-based adhesive compounds without the above-mentioned problems.

The subject of the present invention is a method as defined in claim 1 for the manufacture of a pre-vulcanized tread strip assembly useful for cold retreading of a tyre; said method being characterized in that it comprises a phase of application of an adhesive compound, in which a water-based adhesive compound layer is applied on an inner surface of a pre-vulcanized tread strip; and a covering phase, in which a polymer film consisting of a polyester-based polymer chemical is arranged to cover said water-based adhesive compound layer when the same comprises a water content ranging from 40 to 60% by weight.

Preferably, said polymer chemical is based on starch and polyester.

Preferably, said polymer chemical belongs to the family of polymer materials marketed under the trade name MATER BI®.

Some embodiment examples are given below for purely illustrative non-limiting purposes.

In particular, different pre-vulcanized tread strip assemblies were compared which substantially differ from one another in terms of the solvent used in the adhesive compound and the type of polymer film used.

For the adhesion tests, five different pre-vulcanized tread strip assemblies were produced (A - E) and for each of these the adhesive force between the polymer film and the pre-vulcanized tread strip was calculated. The procedure followed for the adhesion test entails covering the surface of a vulcanized compound with a layer of cement and covering the surface with the polymer film, applying a known weight. After approximately 12 hours the adhesion between compound and film is measured with a tensiometer.

The five assemblies were produced maintaining the same type of pre-vulcanized tread strip and varying both the type of adhesive compound and the type of polymer film. In particular, 4 comparison assemblies (A - D) and one assembly according to the present invention (E) were produced.

In particular, the comparison assembly A comprises an organic solvent-based adhesive compound having 80% by weight of heptane and a polyethylene polymer film; the comparison assembly B comprises a water-based adhesive compound having 65% by weight of water and a polyethylene polymer film applied after complete evaporation of the water; the comparison assembly C comprises a water-based adhesive compound comprising a water content equal to 50% by weight and a polyethylene polymer film; the comparison assembly D comprises a water-based adhesive compound and a polymer film produced with a starch and polyester-based polymer chemical applied after complete evaporation of the water; the assembly according to the invention E comprises a water-based adhesive compound comprising a water content equal to 50% by weight and a polymer film produced with a starch and polyester-based polymer chemical.

For a more correct evaluation of the examples given, it is important to underline that for the assemblies B-E the same adhesive compound in the same quantity was used.

In the assemblies of the examples, the polyethylene-based polymer film belongs to the LDPE family, while the polymer film is obtained from a starch and polyester-based polymer chemical marketed by the company Novamont and belongs to the Mater Bi® family.
Table I shows the adhesion values found for the five assemblies and expressed in N/mm.

**TABLE I**

| | A | B | C | D | E |
|---|---|---|---|---|---|
| N/mm | 12*10⁻³ | 00.5*10⁻³ | 0.15*10⁻³ | 0.15*10⁻³ | 10*10⁻³ |

From the values given in Table I it is evident that the use of a water-based adhesive compound with a water content equal to 50% by weight and a polymer film produced with a polyester-based polymer chemical is able to guarantee adhesion levels comparable to those of the conventional assemblies comprising a solvent-based adhesive compound and a polyethylene film (comparison assembly A).

In other words, from the results reported in table I it can be seen that the present invention is based on an unexpected synergic effect between the water present in the adhesive compound and the polyester film. The above is demonstrated both by comparison between the results relative to the comparison assemblies B and C and the results relative to the assembly of the invention E, and by comparison between the results relative to the comparison assembly D and the results relative to the assembly of the invention E.

In fact, the comparison assemblies B and C, although they comprise a significant quantity of water in their adhesive compounds, do not have satisfactory adhesion values since they comprise a polymer film made of polyether and not polyester; in the same way, the assembly D, although it comprises a polyester-based polymer film, does not have satisfactory adhesion values since it does not comprise water in the adhesive compound.

The assemblies C and E underwent a test designed to verify the percentage of water evaporated from the compound during storage of the assemblies. In particular, the evaporation capacity of the water from the adhesive compound in the two assemblies was evaluated by means of a measurement of the percentage of residual water after two days of storage.

Table II shows the percentage values of residual water.

**TABLE II**

| | C | E |
|---|---|---|
| 2 days of storage | 38% | 5% |

From the values reported in Table II it is evident that the presence of the polymer film produced with a starch and polyester-based polymer chemical guarantees evaporation of the water from the water-based adhesive compound and, therefore, drying thereof. As said previously, drying of the adhesive compound layer ensures correct vulcanization.

The results of Table II are a further demonstration of the synergic effect existing between the water present in the adhesive compounds and the polyester-based polymer film. Summarizing, the synergic effect between the water present in the water-based adhesive compound layer and the polyester-based polymer film unexpectedly guarantees both a high level of adhesion between the film and the adhesive compound layer, and correct drying of said adhesive compound layer during storage of the resulting assembly.

A secondary advantage of the assemblies subject of the present invention is greater protection against UV rays deriving from use of the pigment in the polymer film. In fact, as is known, UV rays can cause ageing of the adhesive compound, negatively affecting its adhesive power.

To conclude, the use of a polymer film produced with a starch and polyester-based polymer chemical allows the use of water-based adhesive compounds in pre-vulcanized tread strip assemblies without the problems of the known art and at the same time avoiding the environmental problems of the organic solvent-based compounds.

## Claims

1. Method for the manufacture of a pre-vulcanized tread strip assembly useful for cold retreading of a tyre; said method being **characterized in that** it comprises an application phase of an adhesive compound, wherein on an inner surface of a pre-vulcanized tread strip a water-based adhesive compound is applied, and a covering phase, wherein a polymer film consisting of a polyester-based polymer chemical is arranged so as to cover said water-based adhesive compound when the same comprises a water content ranging from 40 to 60% by weight.

2. Method according to claim 1, **characterized in that** said polymer chemical is based on starch and polyester.

3. Method according to claim 2, **characterized in that** said polymer chemical belongs to the family of polymer materials marketed under the trade name MATER BI®.

## Patentansprüche

1. Verfahren zur Herstellung einer vorvulkanisierten Laufflächenstreifenanordung, die für die Kaltrunderneuerung eines Reifens von Nutzen ist; wobei das Verfahren **dadurch gekennzeichnet ist, dass** es eine Auftragungsphase einer Haftmittelverbindung, wobei eine Haftmittelverbindung auf Wasserbasis auf eine Innenoberfläche eines vorvulkanisierten Laufflächenstreifens aufgetragen wird, und eine Bedeckungsphase umfasst, wobei eine aus einer polyesterbasierten Polymerchemikalie bestehende Polymerfolie so angeordnet wird, dass sie die Haftmittelverbindung auf Wasserbasis bedeckt, wenn diese einen Wassergehalt im Bereich von 40 bis 60 Gew.-% umfasst.

2. Verfahren nach Anspruch 1, **dadurch gekennzeichnet, dass** die Polymerchemikalie auf Stärke und Polyester basiert ist.

3. Verfahren nach Anspruch 2, **dadurch gekennzeichnet, dass** die Polymerchemikalie zu der Familie von Polymermaterialien gehört, die unter der Handelsbezeichnung MATER BI® vertrieben wird.

## Revendications

1. Procédé de fabrication d'un ensemble de bande de rechapage pré-vulcanisée utile pour le rechapage à froid d'un pneumatique ; ledit procédé étant **caractérisé en ce qu'**il comprend une phase d'application d'un composé adhésif, dans laquelle sur une surface interne d'une bande de rechapage pré-vulcanisée un composé adhésif à base d'eau est appliqué, et une phase de couverture, dans laquelle un film polymère constitué d'une substance chimique polymère à base de polyester est disposée de façon à couvrir ledit composé adhésif à base d'eau lorsque celui-ci comprend une teneur en eau allant de 40 à 60 % en poids.

2. Procédé selon la revendication 1, **caractérisé en ce que** ladite substance chimique polymère est à base d'amidon et de polyester.

3. Procédé selon la revendication 2, **caractérisé en ce que** ladite substance chimique polymère appartient à la famille de matériaux polymères commercialisée sous la marque MATER BI®.
